# FASCICULE DE BREVET EUROPEEN

(11) **EP 2 726 309 B1**
(45) Date de publication et mention de la délivrance du brevet: **29.03.2017**
(21) Numéro de dépôt: 12738543.3
(22) Date de dépôt: 28.06.2012
(51) Int. Cl.: B60J 5/04

(54) **DISPOSITIF DE PROTECTION LATERALE POUR VEHICULE AUTOMOBILE ET VEHICULE AUTOMOBILE ASSOCIE**
SEITENSCHUTZVORRICHTUNG FÜR EIN KRAFTFAHRZEUG UND ENTSPRECHENDES KRAFTFAHRZEUG
SIDE PROTECTION DEVICE FOR MOTOR VEHICLE AND ASSOCIATED MOTOR VEHICLE

(30) Priorité: 28.06.2011 FR 1155722
(43) Date de publication de la demande: 07.05.2014
(73) Titulaire: Renault S.A.S., 92100 Boulogne-Billancourt (FR)
(72) Inventeur: LE DUC, Francois, 92140 Clamart (FR); LE JAOUEN, Guillaume, 78180 Montigny le Bretonneux (FR)
(74) Mandataire: Renou, Jean-François
(86) Numéro de dépôt international: PCT/FR2012/051487
(87) Numéro de publication internationale: WO 2013/001239

(56) Documents cités:
- EP-A1- 0 493 225
- DE-A1-102005 059 413
- DE-A1-102008 058 225
- FR-A1- 2 770 807
- US-A1- 2004 187 263
- US-A1- 2005 285 429

## Description

### Domaine technique de l'invention

L'invention concerne un dispositif de protection latérale d'un véhicule automobile comprenant une caisse et une ouverture pour l'accès d'au moins un passager au véhicule, le dispositif comprenant :
- un élément de protection latérale, apte à passer d'une position de fermeture, dans laquelle il obture au moins partiellement l'ouverture, à une position d'ouverture,
- un dispositif de liaison, apte à assurer la liaison entre la caisse du véhicule et l'élément de protection latérale,
- un système d'articulation et d'équilibrage, agencé à une première extrémité de l'élément de protection latérale,
- un élément de gâche, destiné à coopérer avec un élément de serrure lié à la caisse du véhicule et agencé à une extrémité opposée de l'élément de protection latérale, et
- au moins un organe de guidage, solidaire de l'élément de protection latérale et destiné à coopérer avec au moins un organe de centrage fixé à la caisse, de sorte à guider la fermeture de l'élément de protection latérale.

L'invention concerne également un véhicule automobile comportant un tel dispositif de protection latérale.

### Etat de la technique

Dans un véhicule traditionnel, tel qu'un véhicule automobile, un ouvrant ou dispositif de protection latérale est classiquement appelé portière, ou porte. Dans ce cas, la portière peut supporter des accessoires saillants de la carrosserie, tels que des rétroviseurs et/ou des déflecteurs.

Il est notamment connu des portières qui s'ouvrent vers l'avant ou vers l'arrière d'un véhicule suivant un axe sensiblement vertical. Il est également connu des portières, dites portières papillon, qui s'ouvrent vers le haut selon un axe sensiblement horizontal. Ces portières présentent notamment l'inconvénient de nécessiter un espace de débattement relativement important autour du véhicule pour être manoeuvrées.

Il est également connu des portières coulissantes qui nécessitent cependant un important dispositif de glissières le long du véhicule.

Afin de faciliter le déplacement et le stationnement dans les villes, certains véhicules automobiles présentent une structure compacte permettant de limiter leur encombrement au sol. Pour de tels véhicules, l'optimisation du coût et de la masse du véhicule, ainsi que la maîtrise de la largeur, incitent à ne pas les équiper des portières habituellement conçues pour les véhicules traditionnels. Ces portières s'avèrent en effet lourdes, complexes et coûteuses. De plus, certaines fonctionnalités, telles que l'étanchéité périphérique ou la sécurité, ne sont pas forcément indispensables pour ce type de véhicules.

Par ailleurs, la Demanderesse a déjà proposé de nouvelles solutions de portes à ouverture en élytre, notamment comme décrit dans le document EP 0 493 225. Toutefois, de telles portes s'avèrent difficiles à transposer et mettre en oeuvre selon le type de véhicule considéré, notamment dans le cas d'un véhicule de très petite taille.

Dès lors, afin de pouvoir continuer à offrir aux occupants une protection aux intempéries et/ou aux chocs latéraux, et éventuellement de prévenir les intrusions, il est nécessaire de rechercher de nouvelles solutions, notamment depuis l'apparition de nouveaux véhicules urbains de petite taille par rapport aux véhicules classiques.

### Objet de l'invention

L'invention a pour but de remédier à l'ensemble des inconvénients précités et a pour objet la réalisation d'un dispositif de protection latérale pour véhicule automobile, qui n'offre pas les mêmes contraintes qu'une porte traditionnelle et qui permette d'avoir une protection optimale des occupants du véhicule.

L'objet de l'invention est caractérisé, plus particulièrement, par le fait que l'élément de protection latérale comporte une ossature interne comprenant un caisson en matière plastique et un tube raidisseur en matière métallique, ledit caisson comportant une première portion multi nervurées, apte à recevoir le tube raidisseur, et une seconde portion ajourée, apte à délimiter un cadre pour un panneau translucide.

Un tel dispositif de protection latérale permet ainsi de répondre aux conditions minimales de protection des occupants, avec un système d'ouvrant simple à manipuler et facile à intégrer sur le côté d'un véhicule, et un dispositif de protection latérale à la fois léger et suffisamment rigide pour répondre aux différentes normes de sécurité. De même, un tel dispositif de protection latérale, même s'il ne couvre pas l'ensemble de l'ouverture, permet de renforcer le sentiment de sécurité pour les passagers, tant au roulage qu'à l'arrêt. Il offre également un surcroit de protection aérodynamique et aux intempéries.

D'autres avantages et caractéristiques de l'invention peuvent être considérées isolément ou en combinaison :
- Ledit système d'articulation et d'équilibrage peut comporter :
   - un axe de rotation, orienté sensiblement perpendiculairement à l'élément de protection latérale et lié à la caisse et à l'élément de protection latérale par l'intermédiaire de platines de fixation, et
   - un organe d'amortissement, relié à l'élément de protection latérale et à la caisse, de sorte à permettre une ouverture de l'élément de protection latérale selon un angle de rotation de l'ordre de 120°.
- Le dispositif de protection latérale peut comporter un second organe de guidage, solidaire de l'élément de protection latérale et destiné à coopérer avec un second organe de centrage fixé à la caisse, de sorte à optimiser le guidage de la fermeture de l'élément de protection latérale.
- Chaque organe de centrage peut comporter un pion fixé à la caisse et faisant saillie de la caisse sensiblement vers l'ouverture, chaque pion étant muni d'un surmoulage en matériau polymère.
- Chaque organe de guidage peut comporter une pièce de section en U, fixée en saillie de l'élément de protection latérale, la pièce de section en U présentant deux branches formant un espacement destiné à coopérer avec l'organe de centrage associé.
- Chaque pièce de section en U peut comporter une première portion sensiblement plane venant se fixer contre ledit caisson de l'ossature de l'élément de protection latérale.
- Ladite portion plane de chaque pièce de section en U peut être fixée au moyen de deux vis.
- Les extrémités des branches de chaque pièce de section en U peuvent être chanfreinées vers l'intérieur dudit espacement, de sorte à optimiser le guidage de l'organe de centrage associé.
- Le tube raidisseur s'étendant le long de l'élément de protection latérale, le tube raidisseur peut être muni à ses deux extrémités opposées dudit système d'articulation et d'équilibrage et dudit élément de gâche.

L'invention a également pour objet la réalisation d'un véhicule automobile, notamment du type petit véhicule urbain, et dont les caractéristiques sont optimales en termes de sécurité des passagers.

Cet objet de l'invention est caractérisé plus particulièrement en ce que le véhicule automobile comporte un tel dispositif de protection latérale.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une vue de côté d'une partie d'un véhicule automobile selon l'invention muni d'un mode particulier de réalisation d'un dispositif de protection latérale selon l'invention, dans une première position de fermeture.
La figure 2 représente une vue de côté du véhicule automobile selon la figure 1, le dispositif de protection latérale étant dans une seconde position d'ouverture.
La figure 3 représente une vue de côté du dispositif de protection latérale selon les figures 1 et 2, représenté sans le véhicule automobile associé.
La figure 4 représente une vue agrandie en perspective d'un système d'articulation et d'équilibrage du dispositif de protection latérale selon les figures 1 à 3.
Les figures 5 à 7 représentent chacune une vue agrandie en perspective d'une portion du dispositif de protection latérale selon les figures 1 à 4.
Les figures 8 et 9 représentent chacune une vue en perspective d'un élément constitutif du dispositif de protection latérale selon les figures 1 à 7.

### Description de modes particuliers de réalisation

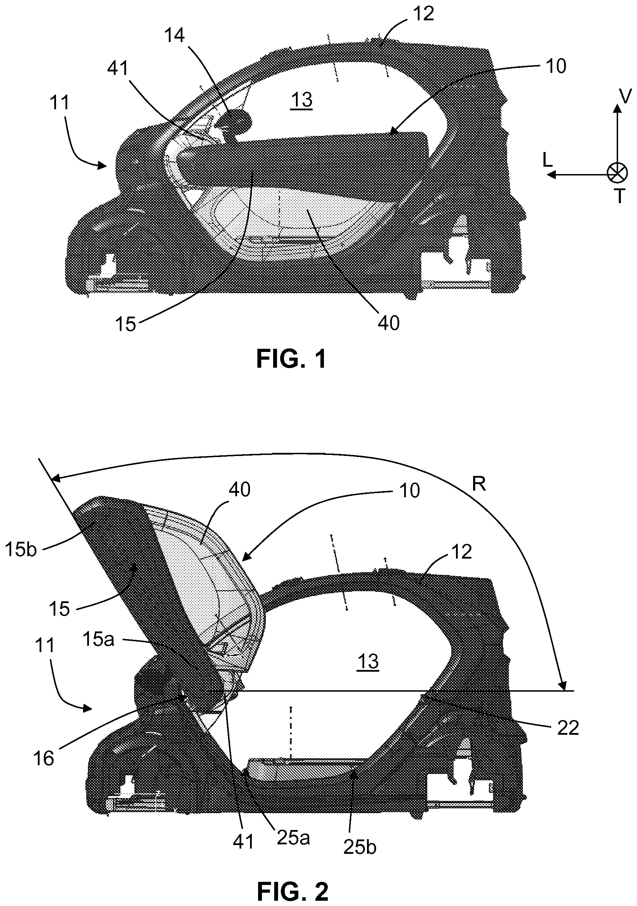

Dans la description qui va suivre, des éléments identiques ou analogues porteront les mêmes chiffres et nombres de référence. On définit les termes avant et arrière par rapport à la direction longitudinale du véhicule. Dans la description qui suit, nous prendrons à titre non limitatif une orientation longitudinale, verticale et transversale indiquée par le trièdre L, V, T représenté sur la figure 1.

En référence aux figures 1 à 9, le dispositif de protection latérale 10 selon l'invention est destiné à équiper un véhicule automobile 11. Plus particulièrement, les figures 1 et 2 représentent le côté gauche d'un véhicule 11 comportant plus de deux roues (non représentées), de préférence quatre roues, à places en tandem, de préférence une place conducteur et une ou deux places arrières passagers, très proche de l'agencement des places d'un véhicule à deux roues.

Sur les figures 1 et 2, le véhicule 11 comprend une caisse 12 avec une ouverture 13 pour l'accès d'au moins un passager à l'intérieur du véhicule. Dans l'exemple représenté sur les figures 1 et 2, un rétroviseur 14, solidaire du dispositif de protection latérale 10, est saillant sur le côté du véhicule 11. L'ouverture 13 est obturée, de préférence, partiellement par un élément de protection latérale 15 du dispositif 10, qui permet non seulement d'empêcher les occupants de chuter en dehors du véhicule, mais qui permet également de protéger le ou les occupants en cas de choc latéral sur le véhicule ou plus simplement contre toute projection extérieur d'objet ou de liquide en provenance de l'extérieur ou de la route.

Dans la description qui va suivre, on entend par élément de protection latérale 15, tout élément, du type ouvrant ou bandeau ou structure, qui obture au moins partiellement l'ouverture 13 formée dans la caisse 12 du véhicule 11 et qui permette une protection latérale du ou des occupants dans sa première position de fermeture (figure 1).

Sur la figure 1, l'élément de protection latérale 15 est dans une première position de fermeture, sensiblement à l'horizontale selon l'axe longitudinal L du véhicule 11. Sur la figure 2, l'élément de protection latérale 15 est dans une seconde position d'ouverture maximale, selon un angle de rotation R sensiblement autour de l'axe transversal T de l'ordre de 120°.

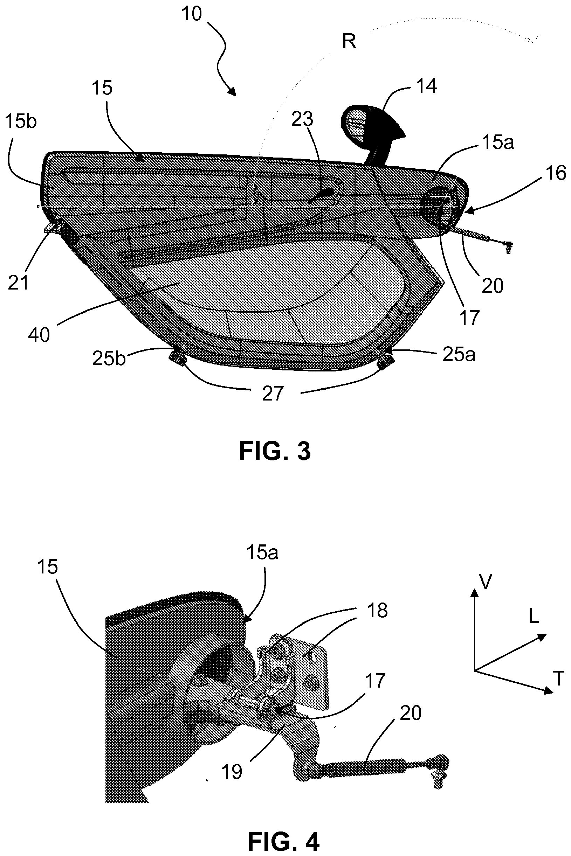

Pour réaliser cette ouverture spécifique en élytre, selon l'angle de rotation R de l'ordre de 120° (figure 2), le dispositif de protection 10 comporte un système d'articulation et d'équilibrage 16, agencé à une première extrémité 15a de l'élément de protection latérale 15. Plus particulièrement, comme représenté sur les figures 3 et 4, le système d'articulation et d'équilibrage 16 comporte un axe de rotation 17 de l'élément de protection latérale 15, sensiblement parallèle à l'axe transversal T du véhicule 11 (figure 4) et orienté sensiblement perpendiculairement à l'élément de protection latérale 15. L'axe de rotation 17 est notamment lié à la caisse 11 par l'intermédiaire de platines de fixation 18 et lié à l'élément de protection latérale 15 par une platine de liaison, ou de fixation, 19, agencée à la première extrémité 15a de l'élément de protection latérale 15 et reliée à la caisse 11 par l'intermédiaire d'un organe d'amortissement 20, par exemple du type vérin pneumatique (figure 4).

Un tel système d'articulation et d'équilibrage 16, avec l'axe de rotation 17 et le vérin pneumatique 20, permet ainsi d'obtenir l'ouverture caractéristique en élytre, selon l'angle de rotation R de l'ordre de 120°, permettant un accès optimal des occupants à l'intérieur du véhicule et une prise en main facilitée, car très haute, du dispositif de protection latérale 10 en vue de sa fermeture (figure 1).

Par ailleurs, le système d'articulation et d'équilibrage 16 est avantageusement agencé dans la planche de bord 41 du véhicule 11 (figures 1 et 2), de sorte à être caché au maximum de la vision des occupants, pour notamment procurer un meilleur effet de design et de finition intérieur du véhicule.

Par ailleurs, comme représenté plus particulièrement sur les figures 2 et 3, le dispositif de protection 10 selon l'invention comporte également un élément de gâche 21 (figure 3), agencé au niveau de l'extrémité 15b de l'élément de protection latérale 15 à l'opposé de l'extrémité 15a munie du système d'articulation et d'équilibrage 16 et destiné à coopérer avec un élément de serrure 22 agencé sur la caisse 12 du véhicule 11 (figure 2). Le système de gâche 21 et serrure 22 est actionné, par exemple, par l'intermédiaire d'une commande d'ouverture intérieur 23, agencée à l'intérieur du véhicule 11 sur l'élément de protection latérale 15 (figure 3).

Par ailleurs, comme représenté plus particulièrement sur les figures 2, 3 et 5 à 7, le dispositif de protection 10 selon l'invention comporte au moins un organe de guidage 24, de préférence deux organes de guidage 24a, 24b, solidaires de l'élément de protection latérale 15 et destinés à coopérer avec deux organes de centrages 25a, 25b associés, fixés sur la caisse 12 du véhicule (figure 2). De tels organes de guidage 24 et de tels organes de centrage 25 ont pour but d'optimiser le guidage de la fermeture de l'élément de protection latérale 15.

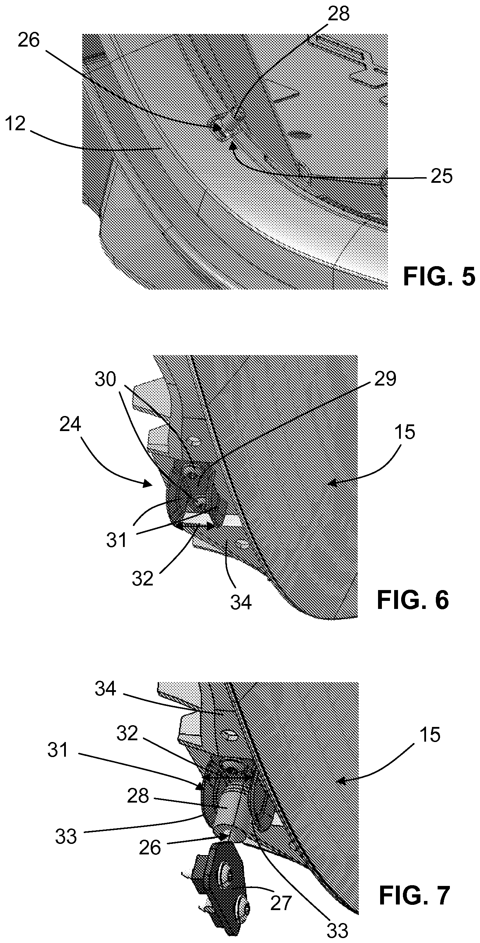

Sur les figures 5 et 7, chaque organe de centrage 25 comporte un pion 26, ou tige, fixé sur la caisse 12, par exemple par l'intermédiaire d'une platine 27, agencée à l'intérieure de la caisse 12, de sorte à ce qu'uniquement le pion 26 fasse saillie de la caisse 12, sensiblement dans le plan de l'ouverture 13, du véhicule 11 (figures 2 et 5). Sur les figures 3 et 7, la platine 27 associée à chaque pion 26 est représentée visible sans la caisse 12 pour des raisons de clarté.

De même, chaque pion 26 est muni à son extrémité libre d'un surmoulage 28, de préférence en matériau élastomère, apte à la fois à faciliter le guidage mais aussi à éviter toute blessure d'un occupant sortant du véhicule 11 et s'accrochant au pion 26. Ainsi, comme représenté plus particulièrement sur la figure 5, uniquement le surmoulage 28 de chaque organe de centrage 25 fait saillie de la caisse 12, pour coopérer avec l'organe de guidage 24 associé, lié à l'élément de protection latérale 15, comme décrit ci-après.

Sur les figures 6 et 7, chaque organe de guidage 24 est, de préférence, une pièce de section en U, comportant une première portion 29 sensiblement plane venant se fixer, par exemple, contre un caisson 34 de l'élément de protection latérale 15, au moyen par exemple de deux vis 30, ou rivets. La pièce de section en U comporte également deux banches 31 formant un espacement 32 entre elles, apte à coopérer avec l'organe de centrage 25 associé. Les deux branches 31 font saillie de l'élément de protection latérale 15 sensiblement verticalement vers le bas du véhicule 11, plus particulièrement en direction de la caisse 12, lorsque le dispositif de protection 10 est dans sa position de fermeture (figure 1).

Par ailleurs, comme représenté plus particulièrement sur la figure 7, les deux branches 31 de la pièce de section en U comportent des extrémités chanfreinées 33, aptes à optimiser le guidage du pion 26 associé, plus particulièrement du surmoulage 28, lors de son passage dans l'espacement 32 formé entre les branches 31 de la pièce de section en U.

La fermeture et le guidage/centrage de l'élément de protection latérale 15 vont maintenant être décrits plus en détails au regard des figures 1 à 3 et des figures 5 à 7. Comme représenté sur les figures 2 et 3, les deux organes de centrage 25a, 25b sont réparties sur le bord de l'ouverture 13 de la caisse 12, de préférence sensiblement en regard des extrémités 15a et 15b de l'élément de protection latérale 15, de sorte à optimiser le guidage de l'élément de protection latérale 15. Lors de la fermeture de l'élément de protection latérale 15, pour passer de sa position représentée sur la figure 2 à sa position représentée sur la figure 1, les branches 31 de l'organe de guidage 24a viennent se positionner de part et d'autre du surmoulage 28 du pion 26 de l'organe de centrage 25a associé (figures 2 et 3), grâce aux extrémités chanfreinées 33 et à l'espacement 32 formé par les branches 31 de l'organe de guidage 24a. Puis, vers la fin de la fermeture, l'organe de guidage 24b vient coopérer avec l'autre pion 26 de l'organe de centrage 25b, positionné sensiblement en regard de l'extrémité 15b de l'élément de protection latérale 15 du côté gâche 21/serrure 22, de sorte à bien centrer l'élément de protection latérale 15 et finir le guidage et la fermeture de l'élément de protection latérale 15.

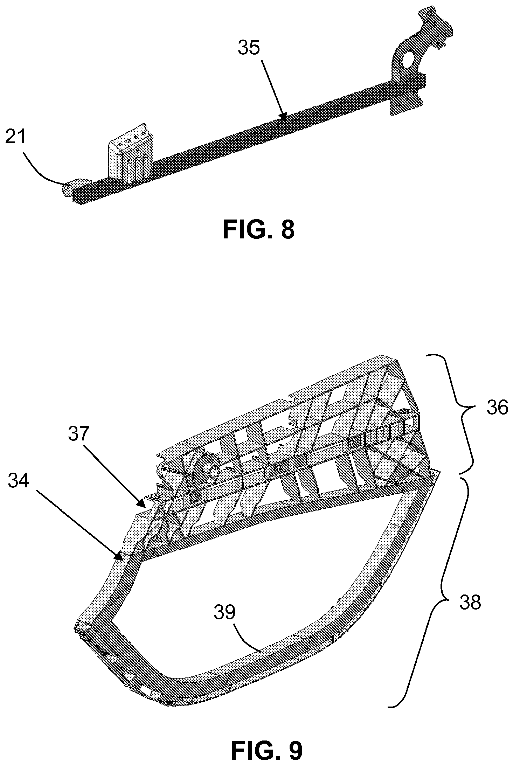

Sur les figures 8 et 9, le mode particulier de réalisation de l'élément de protection latérale 15 du dispositif d'assemblage 10 selon l'invention comporte avantageusement une ossature interne comprenant un caisson 34, de préférence en matière plastique, ou thermoplastique, et un tube raidisseur 35, de préférence en matière métallique. Le caisson 34 est réalisé en matière plastique, par exemple en matériau polymère chargé de fibres de verre, par exemple à 35%, pour des raisons de poids et de coûts de fabrication, tandis que le tube raidisseur 35 est en matière métallique, par exemple de l'acier, pour des questions de sécurité et de renforcement de l'élément de protection latérale 15.

Sur la figure 8, le tube raidisseur 35 de l'élément de protection latérale 15 comporte une section, de préférence, carrée et s'étend, de préférence, tout le long de l'élément de protection latérale 15 (non représenté sur la figure 8 pour des raisons de clarté), de sorte à être muni à ses extrémités du système de gâche 21 et du système d'articulation et d'équilibrage 16 (non représenté sur la figure 8 pour des raisons de clarté).

Sur la figure 9, le caisson 34 de l'élément de protection latérale 15 (non représenté sur la figure 9 pour des raisons de clarté) comprend une première portion 36 multi nervurées, laquelle délimite un logement 37 pour le tube raidisseur 35, et une seconde portion 38 ajourée, délimitant un cadre 39 pour un panneau translucide 40 pouvant équiper l'élément de protection latérale 15 (figures 1 à 3).

Un tel élément de protection latérale 15 présente ainsi l'avantage d'être relativement léger, grâce à l'ossature en matière plastique, tout en offrant une bonne résistance aux chocs latéraux, grâce au tube raidisseur.

Quel que soit le mode de réalisation du dispositif de protection latérale 10 comme décrit ci-dessus, celui-ci présente notamment les avantages suivants :
- l'élément de protection latérale 15 permet de répondre à toutes les contraintes spécifiques associées à ce type de véhicule, à savoir la cinématique spécifique de l'élément de protection latérale, les contraintes dues au design du véhicule, les contraintes dues à l'environnement déjà existant, les différents cahiers des charges en endurance, raideur, torsion, etc. ;
- le dispositif de protection latérale est à la fois léger et très rigide, grâce au caisson 34 et au tube raidisseur 35, l'élément de protection latérale 15 présente une seule articulation, qui le rend simple à manipuler et à intégrer sur la caisse du véhicule.

L'invention n'est pas limitée aux différents modes de réalisation décrits ci-dessus. Notamment, le dispositif de protection peut comporter tout type de système d'articulation et d'équilibrage, tant qu'il permet cette cinématique caractéristique avec un angle de rotation de l'ordre de 120°, tout type d'éléments de gâche et de serrure, tant qu'ils permettent le verrouillage de l'élément de protection latérale sur la caisse, et tout type d'organes de guidage et de centrage, tant qu'ils permettent l'optimisation du guidage de la fermeture de l'élément de protection latérale.

Par ailleurs, l'élément de protection latérale peut comporter tout type d'ossature, tant qu'elle comporte un caisson en matière plastique et un tube raidisseur en matière métallique, de manière à répondre à la double exigence de légèreté et de sécurité.

Un tel dispositif de protection latéral 10 s'applique donc à tout type de véhicule automobile 11, notamment petit véhicule urbain, de type classique ou électrique, de type à deux ou trois places en tandem.

## Revendications

1. Dispositif de protection latérale (10) d'un véhicule automobile (11) comprenant une caisse (12) et une ouverture (13) pour l'accès d'au moins un passager au véhicule (11), le dispositif (10) comprenant :
- un élément de protection latérale (15), apte à passer d'une position de fermeture, dans laquelle il obture au moins partiellement l'ouverture (13), à une position d'ouverture,
- un dispositif de liaison, apte à assurer la liaison entre la caisse (12) du véhicule (11) et l'élément de protection latérale (15),
- un système d'articulation et d'équilibrage (16), agencé à une première extrémité (15a) de l'élément de protection latérale (15),
- un élément de gâche (21), destiné à coopérer avec un élément de serrure (22) lié à la caisse (12) du véhicule (11) et agencé à une extrémité opposée (15b) de l'élément de protection latérale (15), et
- au moins un organe de guidage (24a, 24b), solidaire de l'élément de protection latérale (15) et destiné à coopérer avec au moins un organe de centrage (25a, 25b) fixé à la caisse (12), de sorte à guider la fermeture de l'élément de protection latérale (15),
**dispositif de protection caractérisé en ce que** l'élément de protection latérale (15) comporte une ossature interne comprenant un caisson (34) en matière plastique et un tube raidisseur (35) en matière métallique muni à ses extrémités de l'élément de gâche (21) et du système d'articulation et d'équilibrage (16), ledit caisson (34) comportant une première portion (36) multi nervurées, apte à recevoir le tube raidisseur (35), et une seconde portion (38) ajourée, apte à délimiter un cadre (39) pour un panneau translucide (40).

2. Dispositif de protection (10) selon la revendication précédente, **caractérisé en ce que** ledit système d'articulation et d'équilibrage (16) comporte :
- un axe de rotation (17), orienté sensiblement perpendiculairement à l'élément de protection latérale (15) et lié à la caisse (12) et à l'élément de protection latérale (15) par l'intermédiaire de platines de fixation (18, 19), et
- un organe d'amortissement (20), relié à l'élément de protection latérale (15) et à la caisse (12), de sorte à permettre une ouverture de l'élément de protection latérale (15) selon un angle de rotation (R) de l'ordre de 120°.

3. Dispositif de protection (10) selon l'une quelconque des revendications précédentes, **caractérisé en ce qu'**il comporte un second organe de guidage (24a, 24b), solidaire de l'élément de protection latérale (15) et destiné à coopérer avec un second organe de centrage (25a, 25b) fixé à la caisse (12), de sorte à optimiser le guidage de la fermeture de l'élément de protection latérale (15).

4. Dispositif de protection (10) selon l'une quelconque des revendications précédentes, **caractérisé en ce que** chaque organe de centrage (25) comporte un pion (26) fixé à la caisse (12) et faisant saillie de la caisse (12) sensiblement vers l'ouverture (13), chaque pion (26) étant muni d'un surmoulage (28) en matériau polymère.

5. Dispositif de protection (10) selon l'une quelconque des revendications précédentes, **caractérisé en ce que** chaque organe de guidage (24) comporte une pièce de section en U (29, 31), fixée (30) en saillie de l'élément de protection latérale (15), la pièce de section en U présentant deux branches (31) formant un espacement (32) destiné à coopérer avec l'organe de centrage (25) associé.

6. Dispositif de protection selon la revendication précédente, **caractérisé en ce que** chaque pièce de section en U comporte une première portion (29) sensiblement plane venant se fixer contre ledit caisson (34) de l'ossature de l'élément de protection latérale (15).

7. Dispositif de protection latérale selon la revendication précédente, **caractérisé en ce que** ladite portion plane (29) de chaque pièce de section en U est fixée au moyen de deux vis (30).

8. Dispositif de protection (10) selon la revendication précédente, **caractérisé en ce que** les extrémités des branches (31) de chaque pièce de section en U sont chanfreinées (33) vers l'intérieur dudit espacement (32), de sorte à optimiser le guidage de l'organe de centrage (25) associé.

9. Dispositif de protection (10) selon l'une quelconque des revendications précédentes, **caractérisé en ce que**, le tube raidisseur (35) s'étendant le long de l'élément de protection latérale (15).

10. Véhicule automobile (11), **caractérisé en ce qu'**il comporte un dispositif de protection latérale (10) selon l'une quelconque des revendications précédentes.

## Patentansprüche

1. Seitenschutzvorrichtung (10) eines Kraftfahrzeugs (11) umfassend eine Karosserie (12) und eine Öffnung (13) für den Zugang mindestens eines Insassen in das Fahrzeug (11), wobei die Vorrichtung (10) umfasst:
- ein Seitenschutzelement (15), das in der Lage ist, von einer Schließposition, in der es die Öffnung (13) mindestens teilweise verschließt, in eine Öffnungsposition überzugehen,
- eine Verbindungsvorrichtung, die in der Lage ist, die Verbindung zwischen der Karosserie (12) des Fahrzeugs (11) und dem Seitenschutzelement (15) sicherzustellen,
- ein Gelenk- und Ausgleichsystem (16), das an einem ersten Ende (15a) des Seitenschutzelements (15) ausgebildet ist,
- ein Schließelement (21), das dazu bestimmt ist, mit einem Schlosselement (22), das mit der Karosserie (12) des Fahrzeugs (11) verbunden ist, zusammenzuwirken, und an einem gegenüberliegenden Ende (15b) des Seitenschutzelements (15) ausgebildet ist, und
- mindestens ein Führungsglied (24a, 24b), das fest mit dem Seitenschutzelement (15) verbunden ist und dazu bestimmt ist, mit mindestens einem Zentrierungsglied (25a, 25b), das an der Karosserie (12) befestigt ist, dergestalt zusammenzuwirken, dass das Schließen des Seitenschutzelements (15) geführt wird, Schutzvorrichtung **dadurch gekennzeichnet, dass** das Seitenschutzelement (15) ein internes Skelett, umfassend einen Kasten (34) aus Kunststoff und ein Versteifungsrohr (35) aus Metall, aufweist, versehen an seinen Enden mit dem Schließelement (21) und dem Gelenk- und Ausgleichsystem (16), wobei der Kasten (34) einen mehrfach gerippten ersten Abschnitt (36), der in der Lage ist, das Versteifungsrohr (35) aufzunehmen, und einen durchbrochenen zweiten Abschnitt (38), der in der Lage ist, einen Rahmen (39) für eine lichtdurchlässige Tafel (40) zu begrenzen, aufweist.

2. Schutzvorrichtung (10) nach dem vorangehenden Anspruch, **dadurch gekennzeichnet, dass** das Gelenk- und Ausgleichsystem (16) aufweist:
- eine Rotationsachse (17), die weitestgehend senkrecht zum Seitenschutzelement (15) ausgerichtet und mit der Karosserie (12) und dem Seitenschutzelement (15) mittels Befestigungsplatinen (18, 19) verbunden ist, und
- ein Dämpfungsglied (20), das mit dem Seitenschutzelement (15) und der Karosserie (12) dergestalt verbunden ist, dass ein Öffnen des Seitenschutzelements (15) nach einem Rotationswinkel (R) von etwa 120° ermöglicht wird.

3. Schutzvorrichtung (10) nach einem der vorangehenden Ansprüche, **dadurch gekennzeichnet, dass** sie ein zweites Führungsglied (24a, 24b) aufweist, das fest mit dem Seitenschutzelement (15) verbunden ist und dazu bestimmt ist, mit einem zweiten Zentrierungsglied (25a, 25b), das an der Karosserie (12) befestigt ist, dergestalt zusammenzuwirken, dass das Führen des Schließens des Seitenschutzelements (15) optimiert wird.

4. Schutzvorrichtung (10) nach einem der vorangehenden Ansprüche, **dadurch gekennzeichnet, dass** jedes Zentrierungsglied (25) einen Stift (26) aufweist, der an der Karosserie (12) befestigt ist und aus der Karosserie (12) weitestgehend zur Öffnung (13) hin hervorsteht, wobei jeder Stift (26) mit einer Umspritzung (28) aus Polymerwerkstoff versehen ist.

5. Schutzvorrichtung (10) nach einem der vorangehenden Ansprüche, **dadurch gekennzeichnet, dass** jedes Führungsglied (24) ein Teil mit U-förmigem Querschnitt (29, 31) aufweist, das aus dem Seitenschutzelement (15) hervorstehend befestigt (30) ist, wobei das Teil mit U-förmigem Querschnitt zwei Arme (31) aufweist, die einen Zwischenraum (32) bilden, der dazu bestimmt ist, mit dem zugeordneten Zentrierungsglied (25) zusammenzuwirken.

6. Schutzvorrichtung nach dem vorangehenden Anspruch, **dadurch gekennzeichnet, dass** jedes Teil mit U-förmigem Querschnitt einen ersten Abschnitt (29), der weitestgehend eben ist und gegen den Kasten (34) des Skeletts des Seitenschutzelements (15) befestigt wird, aufweist.

7. Seitenschutzvorrichtung nach dem vorangehenden Anspruch, **dadurch gekennzeichnet, dass** der ebene Abschnitt (29) jedes Teils mit U-förmigem Querschnitt mittels zweier Schrauben (30) befestigt ist.

8. Schutzvorrichtung (10) nach dem vorangehenden Anspruch, **dadurch gekennzeichnet, dass** die Enden der Arme (31) jedes Teils mit U-förmigem Querschnitt zum Inneren des Zwischenraums (32) hin dergestalt angefast (33) sind, dass das Führen des zugeordneten Zentrierungsglieds (25) optimiert wird.

9. Schutzvorrichtung (10) nach einem der vorangehenden Ansprüche, **dadurch gekennzeichnet, dass** das Versteifungsrohr (35) sich entlang dem Seitenschutzelement (15) erstreckt.

10. Kraftfahrzeug (11), **dadurch gekennzeichnet, dass** es eine Seitenschutzvorrichtung (10) nach einem der vorangehenden Ansprüche umfasst.

## Claims

1. Side protection device (10) for a motor vehicle (11), comprising a body (12) and an opening (13) allowing at least one passenger to access the vehicle (11), the device (10) comprising:
- a side protection element (15) able to move from a closed position, in which it at least partly blocks the opening (13), to an open position,
- a linking device able to provide the link between the body (12) of the vehicle (11) and the side protection element (15),
- a hinging and balancing system (16) arranged at a first end (15a) of the side protection element (15),
- a catch element (21) intended to cooperate with a lock element (22) linked to the body (12) of the vehicle (11), and arranged at an opposite end (15b) of the side protection element (15), and
- at least one guide member (24a, 24b) integral with the side protection element (15) and intended to cooperate with at least one centering member (25a, 25b) fixed to the body (12), so as to guide the closure of the side protection element (15),
which protection device is **characterized in that** the side protection element (15) comprises an internal framework comprising a box section (34) of plastic material and a stiffening tube (35) of metal material fitted at its ends with the catch element (21) and with the hinging and balancing system (16), said box section (34) comprising a multi-ribbed first portion (36) able to receive the stiffening tube (35), and an open second portion (38) able to delimit a surround (39) for a translucent panel (40).

2. Protection device (10) according to the preceding claim, **characterized in that** said hinging and balancing system (16) comprises:
- a hinge pin (17) oriented substantially perpendicular to the side protection element (15) and linked to the body (12) and to the side protection element (15) via fixing plates (18, 19), and
- a damping member (20) connected to the side protection element (15) and to the body (12) so as to allow the side protection element (15) to be opened through a rotation angle (R) of the order of 120°.

3. Protection device (10) according to either of the preceding claims, **characterized in that** it comprises a second guide member (24a, 24b) which is integral with the side protection element (15) and intended to cooperate with a second centering member (25a, 25b) fixed to the body (12), so as to optimize guidance of the closure of the side protection element (15).

4. Protection device (10) according to any one of the preceding claims, **characterized in that** each centering member (25) comprises a stud (26) fixed to the body (12) and protruding from the body (12) substantially towards the opening (13), wherein each stud (26) is fitted with an overmolding (28) of polymer material.

5. Protection device (10) according to any one of the preceding claims, **characterized in that** each guide member (24) comprises a U-section part (29, 31), fixed (30) protruding from the side protection element (15), the U-section part having two branches (31) forming a space (32) intended to cooperate with the associated centering member (25).

6. Protection device according to the preceding claim, **characterized in that** each U-section part comprises a substantially flat first portion (29) which comes to rest against said box section (34) of the framework of the side protection element (15).

7. Side protection device according to the preceding claim, **characterized in that** said flat portion (29) of each U-section part is fixed by means of two screws (30).

8. Protection device (10) according to the preceding claim, **characterized in that** the ends of the branches (31) of each U-section part are chamfered (33) towards the inside of said space (32) so as to optimize guidance of the associated centering member (25).

9. Protection device (10) according to any one of the preceding claims, **characterized in that**, the stiffening tube (35) extends along the side protection element (15).

10. Motor vehicle (11), **characterized in that** it comprises a side protection device (10) according to any one of the preceding claims.
